# EUROPÄISCHE PATENTSCHRIFT

(11) **EP 1 909 018 B1**
(45) Veröffentlichungstag und Bekanntmachung des Hinweises auf die Patenterteilung: **20.08.2014**
(21) Anmeldenummer: 06123155.1
(22) Anmeldetag: 30.10.2006
(51) Int. Cl.: F16L 59/14, F16L 59/16

(54) **Rohrverbindungsformteil mit thermischer Isolierung und Verfahren zur Herstellung des Rohrverbindungsformteiles**
Pipe connection with thermal insulation and procedure for the manufacture of the pipe connecting part
Connexion des tubes avec isolation thermique et une procédé pour la fabrication de la connexion des tubes

(30) Priorität: 05.10.2006 EP 06121797
(43) Veröffentlichungstag der Anmeldung: 09.04.2008
(73) Patentinhaber: Georg Fischer Rohrleitungssysteme AG, 8201 Schaffhausen (CH)
(72) Erfinder: Muckenschnabel, Harald, 78224 Singen (DE); Meier, Max, 4571 Lüterkofen (CH)
(74) Vertreter: Fenner, Seraina

(56) Entgegenhaltungen:
- EP-A- 0 112 706
- EP-A1- 1 584 460
- DE-A1- 3 006 545
- DE-A1- 3 447 393
- US-A- 4 114 657

## Beschreibung

Die Erfindung bezieht sich auf ein Rohrverbindungsformteil mit thermischer Isolierung umfassend ein Innenrohrteil, eine Dämmschicht und einen Aussenmantel aus Kunststoff, wobei der Aussenmantel und die Dämmschicht aus dem gleichen Werkstoff, beispielsweise Polyurethan, ausgebildet sind.

Im Rohrleitungsbau werden, vor allem bei Anwendungen, bei denen eine gute Dämmung des Mediums gegenüber der Umgebung erforderlich ist, wie beispielsweise bei Rohrleitungssysteme für den Transport von Kälteträgermedien, vermehrt vorisolierte Rohrleitungsabschnitte eingesetzt. Ein gut geeignetes Material zur Isolierung von Kälteträgerrohrleitungen ist reaktives geschäumtes Polyurethan (= PUR). Als Schutz vor eindringendem Wasser, welches einen negativen Einfluss auf die Dämmwirkung des Schaums hat, sowie als Schutz vor mechanischen Beschädigungen der Dämmschicht, werden die isolierten Rohrleitungen mit einem Aussenmantel versehen.

Um die Rohrleitung wird ein Aussenrohr oder ein rohrförmiger Aussenmantel konzentrisch um die Rohrleitung auf einem gleich bleibenden Abstand zur Aussenwand der Rohrleitung angeordnet. Der ringförmige Raum zwischen der Innenwand des Mantels und der Aussenwand der Rohrleitung wird vollständig mit Polyurethanschaum aufgefüllt. Der Polyurethanschaum wird als reaktive schaumbildende Flüssigkeit eingespritzt und der entstehende Schaum härtet aus. Der Schaum haftet gut an den Oberflächen der Rohrleitung und des Aussenmantels und gibt der so vorisolierten Rohrleitung auch eine höhere Steifigkeit.

Die Herstellung von vorisolierten Rohrleitungsteilen ist relativ aufwendig, weil mehrere Komponenten mit unterschiedlichen Eigenschaften zusammen gebracht werden müssen. Die Installation von Rohrverzweigungen in vorisolierten Rohrleitungsnetzwerken ist ebenfalls aufwendig, weil in verschiedenen Arbeitsschritten der Isolierungsmantel und die Rohrleitung freigelegt werden müssen, mit der abzweigenden Rohrleitung verbunden und wieder neu isoliert werden müssen.

Aus der EP 059 017 B1 ist ein gattungsgemässer isolierter Rohrverzweigungsanschluss bekannt. Über einem Abzweigrohrteil wird ein besonders ausgebildetes Isolierabzweigrohrteil geschoben. Das Isolierabzweigrohrteil ist dazu um das abzweigen Rohr verschiebbar angeordnet und weist ein in der Richtung der Hauptrohrleitung verlaufender Längsschlitz auf. Nachdem das Isolierabzweigrohrteil über das Abzweigrohrteil geschoben wurde, wird der Längsschlitz durch besonders ausgebildete und über die Hauptrohrleitung verschiebbare Isoliermantelteile dicht geklemmt gehalten. Abschliessend wird die Rohrverzweigung mit Hülsen aus einem Schrumpfschlauch dampfdicht verschlossen.

Die US 4 114 657 A offenbart eine Wärmeisolierung für Rohre mit grossen Durchmessern mit einem Schaum aus thermisch isolierendem Material der einerseits am Innenrohr und andererseits an einer äusseren Schutzschicht haftet und einen grösseren Teil des Rohres überdeckt, jedoch ein gewisses Stück vor jedem Rohrende in einer geneigten kegelstumpfförmigen Fläche endet.

Eine derartige Isolierung eignet sich für Rohre, ist aber für Rohrverbindungen wie Rohrbögen, Rohrkrümmer oder auch Rohrverzweigungen die eine optimale Dämmung erzielen sollen ungenügend, da breite nicht isolierte Bereiche an den Übergängen entstehen.

Die DE 30 06 545 A1 beschreibt eine thermische Isolierung für Metallrohre. Mittels eines Verfahrens werden auf ein Metallrohr zwei oder mehrere Schichten aus einer Kunststoffisolierung unterschiedlicher Dichtewert aufgeschäumt, wobei die äussere Schicht aus geschäumtem ausgehärtetem Hartkunststoff eine grössere Dichte als die innere Schicht aufweist.

Dies Isolierungsart, bei der sowohl die innere wie auch die äusseres Schicht aufgeschäumt wird, eignet sich nicht für eine Herstellung von fertig isolierten Rohrverbindungsteilen die schnell und einfach zu montieren sind.

Ausgehend von diesem Stand der Technik ist es Aufgabe der Erfindung, ein Rohrverbindungsformteil mit thermischer Isolierung anzugeben, das auch bei einer verzweigten Rohrleitungsführung einfach hergestellt werden kann, das eine möglichst gute Dämmung gewährleistet, eine möglichst geringe Wärmeausdehnung aufweist, eine hohe Steifigkeit gegen Verformung aufweist und möglichst wasser- und dampfdicht ausgebildet ist. Bei der Herstellung des Rohrverbindungsformteils soll die Dämmschicht von dem Aussenmantel möglichst wenig verdrückt oder beschädigt werden.

Diese Aufgabe wird gelöst durch ein Rohrverbindungsformteil mit thermischer Isolierung umfassend ein Innenrohrteil, eine Dämmschicht und einen Aussenmantel aus Kunststoff, wobei der Aussenmantel und die Dämmschicht aus dem gleichen Werkstoff, beispielsweise Polyurethan, ausgebildet sind, wobei der gegossene Aussenmantel an der Dämmschicht anliegend, mit der Aussenseite der ersten Schaumschicht verbindbar und aus einem im Wesentlichen drucklos vergossenen Werkstoffsystem ausgebildet ist.

Die Aufgabe wird auch gelöst durch ein Verfahren zur Herstellung eines Rohrverbindungsformteils gemäss Patentanspruch 12.

Bevorzugte Weiterbildungen der Erfindung ergeben sich aus den abhängigen Ansprüchen.

Es ist von Vorteil, dass das Rohrverbindungsformteil eine möglichst hohe Steifigkeit aufweist. Dies wird dadurch erreicht, dass eine zweite Polyurethanschicht an der ersten Polyurethanschaumschicht anliegend, mit der Aussenseite der ersten Polyurethanschaumschicht verbindbar und aus einem vergiessbaren Polyurethanvergusssystem ausgebildet ist. Dies wird auch dadurch erreicht, dass das Umspritzen des Rohrverbindungsformteils mit der ersten Polyurethanschaumschicht und das Umgiessen der ersten Polyurethanschaumschicht mit der zweiten Polyurethanvergussmasse nach einander in zwei sehr ähnlichen Formen oder in derselben Form auf einer ähnlichen Formanlage durchgeführt werden.

Vor allem bei komplizierten Rohrkrümmungen, Rohrbögen und/oder Rohrverzweigungen, die nur mit hohem und oft manuellem Arbeitsaufwand auf verschiedenen Anlagen aus den einzelnen Teilen zusammengesetzt werden mussten, kann durch die Herstellung der Dämmschicht und des Aussenmantels in der selben Anlage viel Zeit und Arbeitsaufwand eingespart werden.

Ein Ausführungsbeispiel der Erfindung wird anhand der Figuren beschrieben. Es zeigen:
Figur 1 einen Schnitt durch ein erfindungsgemässes Rohrverbindungsformteil,
Figur 2 einen Schnitt durch eine Form zur Herstellung des Rohrverbindungsformteils aus Figur 1 nach einem ersten Verfahrensschritt und
Figur 3 einen Schnitt durch eine weitere Form zur Herstellung des Rohrverbindungsformteils aus Figur 1 nach einem darauf folgenden Verfahrensschritt.

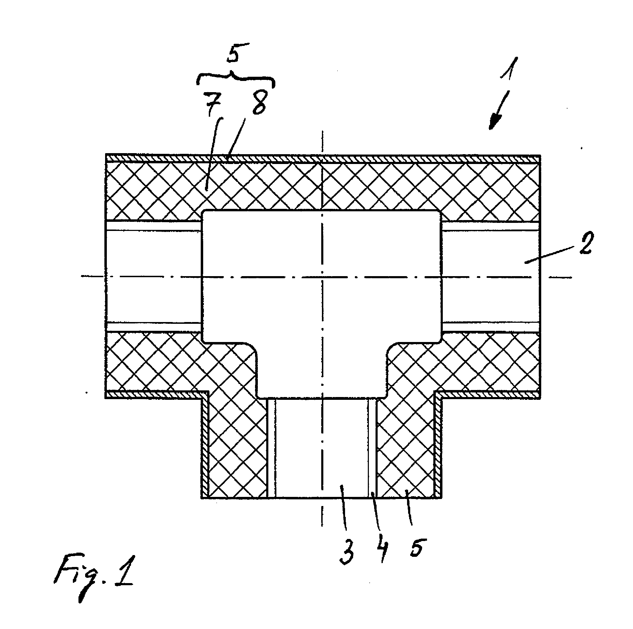

In Figur 1 ist ein Rohrverbindungsformteil 1 mit thermischer Isolierung geschnitten entlang der Mittellinie dargestellt. Das Rohrverbindungsformteil 1 aus Figur 1 ist beispielsweise aus einer Hauptrohrleitung 2 mit einer Rohrverzweigung 3 zusammengesetzt. Das Rohrverbindungsformteil 1 ist, von Innen nach Aussen gesehen aufgebaut aus einem Innenrohrteil 4, beispielsweise aus einem Acryl-Butadien-Styrol-Copolymer (= ABS), einer Dämmschicht 7 und einem Aussenmantel 8 hergestellt.

Die Isolierung des Rohrverbindungsformteiles 1 ist zusammengesetzt aus einer ersten Polyurethanschaumschicht 7, die aus einem geschlossenporigen Schaum hergestellt ist und einer zweiten Polyurethanschicht 8, die aus einem vergiessbaren Polyurethansystem hergestellt ist. Der Aussenmantel 8 kann auch aus einem anderen unter möglichst niederem Druck vergiessbaren Kunststoffsystem hergestellt werden. Dabei ist vor allem wichtig, dass der Aussenmantel bei der Herstellung, beispielsweise durch Vergiessen, die innere Dämmschicht, das heisst die erste Polyurethanschaumschicht 7, nicht zusammendrückt und nicht beschädigt. Der Aussenmantel 8 soll möglichst wenig Druck auf die Dämmschicht 7 ausüben. Der Aussenmantel 8 kann auch nachträglich in einem Schrumpfverfahren fest mit der ersten Polyurethanschaumschicht 7 verbunden werden. Die Polyurethanschaumschichten 7,8 sind durch Adhäsion fest miteinander verklebt und mit dem Innenrohrteil 4 verbunden. Das Rohrverbindungsformteil 1 wird einstückig hergestellt und weist eine grosse Steifigkeit auf.

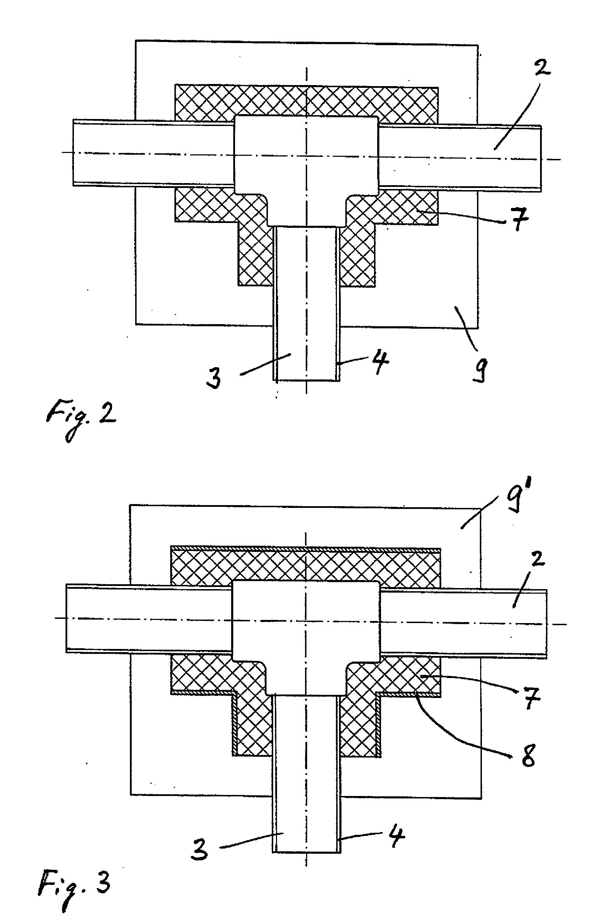

In den Figuren 2 und 3 ist das Rohrverbindungsformteil 1 nach zwei auf einander folgenden Verfahrensschritten des Herstellungsverfahrens geschnitten dargestellt. Das Rohrverbindungsformteil 1 wird in einem kombinierten Schäum- und Giessverfahren in einer ersten Form 9 hergestellt. In die Form 9 wird ein Innenrohrteil 4 mit einer Rohrverzweigung 3 eingelegt. Das Innenrohrteil 4 kann statt aus einem Kunststoff auch aus Metall ausgebildet sein. Der Freiraum zwischen dem Innenrohrteil 4 und der Innenwand der Form 9 wird in einem ersten Verfahrensschritt mit einem reaktiven und geschlossenen Poren bildenden Polyurethanschaum gefüllt und ausgeschäumt.

Anschliessend wird, nachdem die erste Polyurethanschaumschicht 7 ausreagiert hat, das Rohrverbindungsformteil 1 in eine zweite Form 9' gebracht, die nur geringfügig grösser ist als die erste Form 9. In der zweiten Form 9' wird eine zweite Schicht 8 aus einer Polyurethanvergussmasse oder einem anderen nicht- oder nicht wesentlich schäumenden Kunststoffgiesssystem in die Form 9' eingebracht. Das Material für die Vergussmasse des Aussenmantels 8 wird so gewählt, dass der Aussenmantel 8 dabei nur einen geringen Druck auf die Dämmschicht 7 ausübt. An Stelle eines Polyurethansystems kann beispielsweise auch ein Polyepoxysystem oder ein anderes thermoplastisches System gewählt werden. Grundsätzlich ist bei einem geringen Unterschied in den Abmessungen der ersten und der zweiten Form 9,9' auch eine einzige Form mit verstellbaren Innenwandungen machbar.

Die erste Polyurethanschaumschicht 7 und die zweite Polyurethanvergussmasse 8 verbinden sich durch Adhäsion mit einander und bilden einen Isolierungsmantel 5, der einerseits eine gute thermische Isolierung und andererseits eine ausreichende Steifigkeit und Festigkeit des Rohrverbindungsformteil 1 gewährleistet. Die erste Polyurethanschaumschicht 7 ist beispielsweise zwei- bis sechsmal so dick wie der Aussenmantel 8 aus einer Polyurethanvergussmasse 8 oder einem Giessharz. Die Dämmschicht 7 aus Polyurethanschaum weist beispielsweise eine Dichte auf, die wesentlich weniger als 10% der Dichte des Aussenmantels 8 aus der Polyurethanvergussmasse beträgt.

Das Rohrverbindungsformteil 1 wird beispielsweise in Rohrleitungssysteme für Kälteträgermedien verwendet. Das Rohrverbindungsformteil 1 zeichnet sich aus durch eine sehr einfache Herstellung, weil für die Herstellung der Dämmschicht und des Aussenmantels dieselbe Anlage verwendet werden kann. Eine möglichst geringe Wärmeausdehnung wird erreicht durch die Verwendung der gleichen Werkstoffe für Dämmschicht und Mantel. Der Aussenmantel ist wasserdicht und das Rohrverbindungsformteil weist eine hohe Steifigkeit auf. Vor allem bei Rohrverbindungsformteile mit Rohrkrümmungen oder Rohrverzweigungen ist dieses Herstellungsverfahren zeit- und arbeitssparender als bisherigen Herstellungsverfahren. Das Ausrichten des Innenrohres 4 in Bezug auf den Aussenmantel 8 und/oder das Überbringen in einer weiteren Form entfällt. Das

Schrumpfen des Schrumpfschlauches auf einer Schrumpfanlage entfällt.

## Patentansprüche

1. Rohrverbindungsformteil (1) mit thermischer Isolierung umfassend ein Innenrohrteil (4), eine Dämmschicht (7) und einen Aussenmantel (8) aus Kunststoff, wobei der Aussenmantel (8) und die Dämmschicht (7) aus dem gleichen Werkstoff, beispielsweise Polyurethan, ausgebildet sind, **dadurch gekennzeichnet, dass** der gegossene Aussenmantel (8) an der Dämmschicht (7) anliegend, mit der Aussenseite der ersten Schaumschicht (7) verbindbar und aus einem im Wesentlichen drucklos vergossenen Werkstoffsystem ausgebildet ist.

2. Rohrverbindungsformteil (1) mit thermischer Isolierung nach dem Anspruch 1, **dadurch gekennzeichnet, dass** die Dämmschicht (7) an dem Innenrohrteil (4) anliegend, mit der Aussenseite des Innenrohrteiles (4) verbindbar und aus einem Schaumsystem ausgebildet ist.

3. Rohrverbindungsformteil (1) mit thermischer Isolierung nach mindestens einem der Ansprüche 1 oder 2, **dadurch gekennzeichnet, dass** die Dämmschicht (7) an dem Innenrohrteil (4) anliegend, mit der Aussenseite des Innenrohrteiles (4) verbindbar und aus einem geschlossenporigen Polyurethanschaumsystem ausgebildet ist.

4. Rohrverbindungsformteil (1) mit thermischer Isolierung nach mindestens einem der Ansprüche 1 bis 3, **dadurch gekennzeichnet, dass** der Aussenmantel (8) aus einem vergiessbaren und mit der Dämmschicht kompatiblen Werkstoff ausgebildet ist.

5. Rohrverbindungsformteil (1) mit thermischer Isolierung nach mindestens einem der Ansprüche 1 bis 4, **dadurch gekennzeichnet, dass** der Aussenmantel (8) an der Dämmschicht (7) anliegend, mit der Aussenseite der ersten Schaumschicht (7) verbindbar und aus einem vergiessbaren, nicht wesentlich schäumenden Vergusssystem ausgebildet ist.

6. Rohrverbindungsformteil (1) mit thermischer Isolierung nach mindestens einem der Ansprüche 1 bis 5, **dadurch gekennzeichnet, dass** der Aussenmantel (8) an der Dämmschicht (7) anliegend, mit der Aussenseite der ersten Schaumschicht (7) verbindbar und aus einem vergiessbaren, nicht wesentlich schäumenden Polyurethanvergusssystem ausgebildet ist.

7. Rohrverbindungsformteil (1) mit thermischer Isolierung nach mindestens einem der Ansprüche 1 bis 6, **dadurch gekennzeichnet, dass** das Innenrohrteil (4) aus einem Acryl-Butadien-Styrol-Copolymer (= ABS) ausgebildet ist.

8. Rohrverbindungsformteil (1) mit thermischer Isolierung nach mindestens einem der Ansprüche 1 bis 7, **dadurch gekennzeichnet, dass** das Innenrohrteil (4) aus einem beliebigen Kunststoff, beispielsweise Polyethylen, Polypropylen oder Polyvinylchlorid ausgebildet ist.

9. Rohrverbindungsformteil (1) mit thermischer Isolierung nach mindestens einem der Ansprüche 1 bis 8, **dadurch gekennzeichnet, dass** das Rohrverbindungsformteil (1) mindestens eine Rohrverzweigung aufweist.

10. Rohrverbindungsformteil (1) mit thermischer Isolierung nach mindestens einem der Ansprüche 1 bis 9, **dadurch gekennzeichnet, dass** das Rohrverbindungsformteil (1) mindestens eine Rohrkrümmung aufweist.

11. Verfahren zur Herstellung eines Rohrverbindungsformteils (1) mit thermischer Isolierung nach mindestens einem der Ansprüche 1 bis 10, mit zumindest den Verfahrensschritten:
a) Einlegen des Innenrohrteiles (4) in einer ersten Form (9),
b) Umschäumen des Innenrohrteiles (4) mit der ersten Dämmschicht (7) bestehend aus einem Schaumsystem, beispielsweise einem geschlossenporigen Polyurethanschaumsystem,
c) Einlegen des umschäumten Innenrohrteiles (4) mit der Dämmschicht (7) in einer zweiten Form (9'), die geringfügig grösser ist als die erste Form (9) und
d) Im Wesentlichen druckloses Umgiessen der Dämmschicht (7) mit einem Aussenmantel (8) aus einem mit der Dämmschicht (7) kompatiblen und vergiessbaren, nicht schäumenden und geringen Werkzeuginnendruck erzeugenden Werkstoffsystem, ohne dass dabei die Dämmschicht (7) von dem Aussenmantel (8) beschädigt oder zusammengedrückt wird.

12. Verfahren zur Herstellung eines Rohrverbindungsformteils (1) mit thermischer Isolierung nach dem Anspruch 11, **dadurch gekennzeichnet, dass** die Verfahrensschritte b), c) und d) auf einander folgend in derselben Form durchgeführt werden.

## Claims

1. Pipe-connection moulded part (1) having thermal insulation, comprising an inner pipe part (4), an insulating layer (7) and an outer casing (8) of plastic, wherein the outer casing (8) and the insulating layer (7) are formed from the same material, for example polyurethane, **characterized in that** the cast outer casing (8) is in contact with the insulating layer (7), can be connected to the outer side of the first foam layer (7) and is formed from a material system poured in an essentially pressureless manner.

2. Pipe-connection moulded part (1) having thermal insulation according to Claim 1, **characterized in that** the insulating layer (7) is in contact with the inner pipe part (4), can be connected to the outer side of the inner pipe part (4) and is formed from a foam system.

3. Pipe-connection moulded part (1) having thermal insulation according to at least one of Claims 1 and 2, **characterized in that** the insulating layer (7) is in contact with the inner pipe part (4), can be connected to the outer side of the inner pipe part (4) and is formed from a closed-cell polyurethane foam system.

4. Pipe-connection moulded part (1) having thermal insulation according to at least one of Claims 1 to 3, **characterized in that** the outer casing (8) is formed from a pourable material compatible with the insulating layer.

5. Pipe-connection moulded part (1) having thermal insulation according to at least one of Claims 1 to 4, **characterized in that** the outer casing (8) is in contact with the insulating layer (7), can be connected to the outer side of the first foam layer (7) and is formed from a pourable casting system which does foam to a considerable degree.

6. Pipe-connection moulded part (1) having thermal insulation according to at least one of Claims 1 to 5, **characterized in that** the outer casing (8) is in contact with the insulating layer (7), can be connected to the outer side of the first foam layer (7) and is formed from a pourable polyurethane casting system which does not foam to a considerable degree.

7. Pipe-connection moulded part (1) having thermal insulation according to at least one of Claims 1 to 6, **characterized in that** the inner pipe part (4) is formed from an acrylonitrile-butadiene-styrene copolymer (= ABS).

8. Pipe-connection moulded part (1) having thermal insulation according to at least one of Claims 1 to 7, **characterized in that** the inner pipe part (4) is formed from any desired plastic, for example polyethylene, polypropylene or polyvinylchloride.

9. Pipe-connection moulded part (1) having thermal insulation according to at least one of Claims 1 to 8, **characterized in that** the pipe-connection moulded part (1) has at least one pipe branch.

10. Pipe-connection moulded part (1) having thermal insulation according to at least one of Claims 1 to 9, **characterized in that** the pipe-connection moulded part (1) has at least one pipe elbow.

11. Method of producing a pipe-connection moulded part (1) having thermal insulation according to at least one of Claims 1 to 10, comprising at least the following method steps:
a) inserting the inner pipe part (4) into a first mould (9),
b) foam-encapsulating the inner pipe part (4) with a first insulating layer (7), consisting of a foam system, for example a closed-cell polyurethane foam system,
c) inserting the foam-encapsulated inner pipe part (4) with the insulating layer (7) in a second mould (9') which is slightly larger than the first mould (9), and
d) casting an outer casing (8) in an essentially pressureless manner around the insulating layer (7), said outer casing (8) consisting of a pourable, non-foaming material system compatible with the insulating layer (7) producing a low internal tool pressure, without the insulating layer (7) being damaged or compressed by the outer casing (8) in the process..

12. Method of producing a pipe-connection moulded part (1) having thermal insulation according to Claim 11, **characterized in that** the method steps b), c) and d) are carried out successively in the same mould.

## Revendications

1. Raccord tubulaire moulé (1) doté d'une isolation thermique et comprenant une partie tubulaire intérieure (4), une couche isolante (7) et une enveloppe extérieure (8) en matière synthétique, l'enveloppe extérieure (8) et la couche isolante (7) étant réalisées en le même matériau, par exemple le polyuréthane,
**caractérisé en ce que**
l'enveloppe extérieure coulée (8) repose sur la couche isolante (7), peut être raccordée au côté extérieur de la première couche de mousse (7) et est formée d'un système de matériaux coulés essentiellement sans pression.

2. Raccord tubulaire moulé (1) doté d'une isolation thermique selon la revendication 1, **caractérisé en ce que** la couche isolante (7) repose sur la partie tubulaire intérieure (4), peut être reliée au côté extérieur de la partie tubulaire intérieure (4) et est réalisée en un système de mousse.

3. Raccord tubulaire moulé (1) doté d'une isolation thermique selon au moins l'une des revendications 1 et 2, **caractérisé en ce que** la couche isolante (7) repose contre la partie tubulaire intérieure (4), peut être reliée au côté extérieur de la partie tubulaire intérieure (4) et est réalisée en un système de mousse de polyuréthane à porosité fermée.

4. Raccord tubulaire moulé (1) doté d'une isolation thermique selon au moins l'une des revendications 1 à 3, **caractérisé en ce que** l'enveloppe extérieure (8) est réalisée en un matériau apte à être coulé et compatible avec la couche isolante.

5. Raccord tubulaire moulé (1) doté d'une isolation thermique selon au moins l'une des revendications 1 à 4, **caractérisé en ce que** l'enveloppe extérieure (8) repose contre la couche isolante (7), peut être reliée au côté extérieur de la première couche de mousse (7) et est réalisée en un système moulable qui ne mousse essentiellement pas.

6. Raccord tubulaire moulé (1) doté d'une isolation thermique selon au moins l'une des revendications 1 à 5, **caractérisé en ce que** l'enveloppe extérieure (8) repose contre la couche isolante (7), peut être reliée au côté extérieur de la première couche de mousse (7) et est réalisée en un système moulable de polyuréthane qui ne mousse essentiellement pas.

7. Raccord tubulaire moulé (1) doté d'une isolation thermique selon au moins l'une des revendications 1 à 6, **caractérisé en ce que** la partie tubulaire intérieure (4) est réalisée en un copolymère d'acryle, de butadiène et de styrène (= ABS).

8. Raccord tubulaire moulé (1) doté d'une isolation thermique selon au moins l'une des revendications 1 à 7, **caractérisé en ce que** la partie tubulaire intérieure (4) est réalisée en une matière quelconque, par exemple le polyéthylène, le polypropylène ou le poly(chlorure de vinyle).

9. Raccord tubulaire moulé (1) doté d'une isolation thermique selon au moins l'une des revendications 1 à 8, **caractérisé en ce que** le raccord tubulaire moulé (1) présente au moins une ramification tubulaire.

10. Raccord tubulaire moulé (1) doté d'une isolation thermique selon au moins l'une des revendications 1 à 9, **caractérisé en ce que** le raccord tubulaire moulé (1) présente au moins une courbe tubulaire.

11. Procédé de fabrication d'un raccord tubulaire moulé (1) doté d'une isolation thermique selon au moins l'une des revendications 1 à 10, le procédé présentant au moins les étapes suivantes :
a) placement de la partie tubulaire intérieure (4) dans un premier moule (9),
b) englobement de la partie tubulaire intérieure (4) par une mousse formant la première couche isolante (7), constituée d'un système de mousse, par exemple un système de mousse de polyuréthane à porosité fermée,
c) insertion de la partie tubulaire intérieure (4) englobée de mousse et de la couche isolante (7) dans un deuxième moule (9') légèrement plus grand que le premier moule (9) et
d) englobement par coulée essentiellement sans pression de la couche isolante (7) dans une enveloppe extérieure (8) constituée d'un système de matériau compatible avec la couche isolante (7) et apte à être coulé, ne moussant pas et appliquant une légère pression intérieure dans l'outil sans qu'à cette occasion la couche isolante (7) soit endommagée ou comprimée par l'enveloppe extérieure (8).

12. Procédé de fabrication d'un raccord tubulaire moulé (1) doté d'une isolation thermique selon la revendication 11, **caractérisé en ce que** les étapes b), c) et d) du procédé sont exécutées successivement dans le même moule.
